(19) **Europäisches Patentamt**
**European Patent Office**
**Office européen des brevets**

(11) **EP 2 035 665 B1**

(12) **EUROPÄISCHE PATENTSCHRIFT**

(45) Veröffentlichungstag und Bekanntmachung des Hinweises auf die Patenterteilung:
**30.12.2009 Patentblatt 2009/53**

(51) Int Cl.:
***F01N 3/08*** (2006.01)

(21) Anmeldenummer: **07725829.1**

(86) Internationale Anmeldenummer:
**PCT/EP2007/004961**

(22) Anmeldetag: **05.06.2007**

(87) Internationale Veröffentlichungsnummer:
**WO 2007/147485 (27.12.2007 Gazette 2007/52)**

(54) **VERFAHREN ZUR ON-BOARD-REAKTIVIERUNG THERMISCH GEALTERTER STICKOXID-SPEICHERKATALYSATOREN IN KRAFTFAHRZEUGEN MIT ÜBERWIEGEND MAGER BETRIEBENEM VERBRENNUNGSMOTOR**

METHOD FOR ON-BOARD REACTIVATION OF THERMALLY AGED NITROGEN OXIDE STORAGE CATALYSTS IN MOTOR VEHICLES WITH SUBSTANTIALLY LEAN RUNNING INTERNAL COMBUSTION ENGINES

PROCÉDÉ POUR LA RÉACTIVATION EMBARQUEE DE CATALYSEURS À ACCUMULATION D'OXYDES D'AZOTE THERMIQUEMENT VIEILLIS DANS DES VÉHICULES AUTOMOBILES À MOTEUR À COMBUSTION INTERNE FONCTIONNANT PRINCIPALEMENT AVEC UN MÉLANGE PAUVRE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **24.06.2006 DE 102006029080**

(43) Veröffentlichungstag der Anmeldung:
**18.03.2009 Patentblatt 2009/12**

(73) Patentinhaber: **Umicore AG & Co. KG**
**63457 Hanau-Wolfgang (DE)**

(72) Erfinder:
• **ECKHOFF, Stephan**
 **63755 Alzenau (DE)**
• **WITTROCK, Meike**
 **63599 Biebergemuend (DE)**

• **GOEBEL, Ulrich**
 **65795 Hattersheim (DE)**
• **MUELLER, Wilfried**
 **61184 Karben (DE)**
• **KREUZER, Thomas**
 **61184 Karben (DE)**

(56) Entgegenhaltungen:
**EP-A1- 0 982 066**

• **CASAPU ET AL: "Formation and stability of barium aluminate and cerate in NOx storage-reduction catalysts" APPLIED CATALYSIS B: ENVIRONMENTAL, ELSEVIER, Bd. 63, Nr. 3-4, 31. März 2006 (2006-03-31), Seiten 232-242, XP005308677 ISSN: 0926-3373 in der Anmeldung erwähnt**

**EP 2 035 665 B1**

**Beschreibung**

Die Erfindung betrifft ein Verfahren zur Reaktivierung thermisch gealterter Stickoxid-Speicherkatalysatoren, welche Stickoxide speichernde Verbindungen auf einem Ceroxid enthaltenden Trägermaterial aufweisen, in Kraftfahrzeugen mit überwiegend mager betriebenen Verbrennungsmotoren während des Fahrzeugbetriebes.

Stickoxid-Speicherkatalysatoren werden zur Entfernung der im mageren Abgas von so genannten Magermotoren enthaltenen Stickoxide verwendet. Dabei beruht die Reinigungswirkung darauf, daß in einer mageren Betriebsphase des Motors die Stickoxide vom Speichermaterial des Speicherkatalysators vorwiegend in Form von Nitraten gespeichert werden und in einer darauffolgenden fetten Betriebsphase des Motors die zuvor gebildeten Nitrate zersetzt und die wieder freiwerdenden Stickoxide mit den reduzierenden Abgasanteilen am Speicherkatalysator zu Stickstoff, Kohlendioxid und Wasser umgesetzt werden. Zu den Magermotoren werden im Rahmen dieser Erfindung Benzin- und Dieselmotoren gezählt, die während ihrer überwiegenden Betriebsdauer mit einem mageren Luft/Kraftstoff-Gemisch betrieben werden, und die emissionsneutral mit stöchiometrischem Luft/Kraftstoffgemisch betrieben werden können. Die im Abgas dieser Motoren während der Magerphasen enthaltenen Stickoxide bestehen zu einem großen Teil aus Stickstoffmonoxid.

Die Arbeitsweise von Stickoxid-Speicherkatalysatoren wird ausführlich in der SAE-Schrift SAE 950809 beschrieben. Stickoxid-Speicherkatalysatoren bestehen demgemäß aus einem Katalysatormaterial, welches zumeist in Form einer Beschichtung auf einem Tragkörper, aufgebracht ist. Das Katalysatormaterial enthält ein Stickoxid-Speichermaterial und eine katalytisch aktive Komponente. Das Stickoxid-Speichermaterial wiederum besteht aus der eigentlichen Stickoxid-Speicherkomponente, die auf einem Trägermaterial in hochdisperser Form abgeschieden ist.

Als Speicherkomponenten werden vorwiegend die basischen Oxide der Alkalimetalle, der Erdalkalimetalle und der Seltenerdmetalle, insbesondere aber Strontiumoxid und Bariumoxid, eingesetzt, welche mit Stickstoffdioxid zu den entsprechenden Nitraten reagieren. Es ist bekannt, daß diese Materialien an Luft zum überwiegenden Teil in Form von Carbonaten und Hydroxiden vorliegen. Diese Verbindungen eignen sich ebenfalls zur Speicherung der Stickoxide. Wenn daher im Rahmen der Erfindung von den basischen Speicheroxiden gesprochen wird, so sind damit auch die entsprechenden Carbonate und Hydroxide eingeschlossen.

Geeignete Trägermaterialien für die Speicherkomponenten sind temperaturstabile Metalloxide mit hoher Oberfläche von mehr als 10 m$^2$/g, die eine hochdisperse Abscheidung der Speicherkomponenten ermöglichen. Die vorliegende Erfindung befaßt sich insbesondere mit Speichermaterialien, die Ceroxid-haltige Trägermaterialien aufweisen. Hierzu gehören dotiertes Ceroxid und besonders die Mischoxide des Cers mit Zirkon.

Als katalytisch aktive Komponenten werden die Edelmetalle der Platingruppe verwendet, die in der Regel getrennt von den Speicherkomponenten auf einem separaten Trägermaterial abgeschieden werden. Als Trägermaterial für die Platingruppenmetalle wird überwiegend aktives, hochoberflächiges Aluminiumoxid eingesetzt, das ebenfalls Dotierungskomponenten enthalten kann.

Die Aufgabe der katalytisch aktiven Komponenten ist es, im mageren Abgas Kohlenmonoxid und Kohlenwasserstoffe zu Kohlendioxid und Wasser umzusetzen. Außerdem sollen sie den Anteil des Abgases an Stickstoffmonoxid zu Stickstoffdioxid oxidieren, damit es mit dem basischen Speichermaterial zu Nitraten reagieren kann. Mit zunehmender Einlagerung der Stickoxide ins Speichermaterial nimmt die Speicherkapazität des Materials ab. Daher muß von Zeit zu Zeit eine Regeneration des Speichermaterials erfolgen. Hierzu wird der Motor für kurze Zeit mit fetten Luft/Kraftstoff-Gemischen betrieben. Unter den reduzierenden Bedingungen im fetten Abgas werden die gebildeten Nitrate zu Stickoxiden zersetzt und unter Verwendung von Kohlenmonoxid, Wasserstoff und Kohlenwasserstoffen als Reduktionsmittel zu Stickstoff unter Bildung von Wasser und Kohlendioxid reduziert.

Speicherkatalysatoren werden im Betrieb zeitweise mit hohen Abgastemperaturen belastet, was zu einer thermischen Schädigung der Katalysatoren führen kann. Es können zwei wesentliche Alterungseffekte unterschieden werden:

- Die katalytisch aktiven Edelmetallkomponenten sind auf den oxidischen Materialien des Speicherkatalysators in hochdisperser Form mit mittleren Partikelgrößen zwischen etwa 2 und 15 nm aufgebracht. Aufgrund der feinen Verteilung besitzen die Edelmetallpartikel eine hohe Oberfläche für die Wechselwirkung mit den Bestandteilen des Abgases. Besonders im mageren Abgas von Magermotoren wird mit steigender Abgastemperatur eine irreversible Vergrößerung der Edelmetallkristallite beobachtet, die mit einer irreversiblen Verminderung der katalytischen Aktivität einhergeht.

- Die Speicherkomponenten unterliegen bei hohen Temperaturen ebenfalls einer Sinterung, wodurch sich ihre katalytisch aktive Oberfläche vermindert. Außerdem wurde beobachtet, daß die auf Trägermaterialien abgeschiedenen Speicherkomponenten bei hohen Temperaturen mit den Trägermaterialien Verbindungen eingehen, die eine geringere Speicherfähigkeit für Stickoxide aufweisen (siehe SAE Technical Paper 970746 und die EP 0982066 A1). Wird zum Beispiel Bariumoxid auf einem Ceroxid enthaltenden Trägermaterial als Speicherkomponente eingesetzt, so besteht die Gefahr der Bildung von Bariumcerat ($BaCeO_3$).

Die Sinterung der Edelmetallpartikel ist ein irreversibler Prozeß. Eine Wiederherstellung der ursprünglichen Kristallitgrößen durch eine spezielle Behandlung scheint nicht möglich zu sein. Dagegen kann unter bestimmten Voraussetzungen die Verbindungsbildung zwischen Speicherkomponenten und Trägermaterialien durch eine geeignete Behandlung wieder rückgängig gemacht werden und somit die katalytische Aktivität eines Stickoxid-Speicherkatalysators nach einer thermischen Schädigung zumindest teilweise wiederhergestellt werden. Da der Stickoxid-Speicherkatalysator typischerweise Bestandteil einer in einem Kraftfahrzeug fest eingebauten Abgasreinigungsanlage ist, die nur mit hohem Aufwand ausgebaut werden kann, ist es für die praktische Anwendbarkeit einer Katalysatorreaktivierungsmethode von wesentlicher Bedeutung, daß die zur Reaktivierung benötigten Bedingungen während des Fahrbetriebes eingestellt und emissionsneutral gestaltet werden können.

Es ist daher Aufgabe der vorliegenden Erfindung ein Verfahren zur Reaktivierung von Stickoxid-Speicherkatalysatoren, deren Speicherfähigkeit durch Verbindungsbildung der Speicherkomponenten mit den Trägermaterialien infolge hoher Temperaturen vermindert ist, während des regulären Fahrbetriebes eines Kraftfahrzeugs mit überwiegend mager betriebenem Verbrennungsmotor anzugeben. Dabei muß auch während der Reaktivierungsphasen gewährleistet sein, daß die geltenden Emissionsgrenzwerte weitgehend eingehalten werden.

Diese Aufgabe wird durch ein Verfahren zur On-board-Reaktivierung eines thermisch gealterten Stickoxid-Speicherkatalysators gelöst, wobei der Speicherkatalysator basische Strontium- oder Bariumverbindungen oder Strontium- und Bariumverbindungen auf einem Ceroxid enthaltenden Trägermaterial aufweist und darüber hinaus durch die thermische Alterung gebildete Strontium- und/oder Bariumverbindungen mit dem Trägermaterial enthält. Das Verfahren ist **dadurch gekennzeichnet, daß** die Verbindungen des Strontiums und/oder Bariums mit dem Trägermaterial während des regulären Fahrbetriebes eines Kraftfahrzeuges mit überwiegend mager betriebenem Verbrennungsmotor durch Behandeln mit einer 5 - 20 Vol.-% Kohlendioxid, gegebenenfalls 5 - 15 Vol.-% Wasser und gegebenenfalls Stickoxide enthaltenden Gasmischung zersetzt werden. Die Gasmischung wird durch den Motor des Fahrzeugs erzeugt, wobei die Luftzahl der Gasmischung während des Zersetzungsprozesses den Wert $\lambda = 1$ nicht übersteigt. Die Erzeugung der zur Reaktivierung des Katalysators benötigten Gasmischung wird in von der Entschwefelung unabhängigen, kälteren Betriebszuständen des Magermotors mit Abgastemperaturen zwischen 375˚C und 650˚C vorgenommen. Die Dauer der Reaktivierung beträgt wenigstens einige Minuten. Gegebenenfalls kann eine Nachregulierung der Luftzahl der durch den Motor erzeugten Gasmischung durch Eindosierung eines Reduktionsmittels direkt in den Abgasstrang vor Katalysator erfolgen.

Die Erfindung macht sich in erster Linie die Zersetzungsreaktionen des Bariumcerats in Kohlendioxid-haltiger Atmosphäre zunutze.

CASAPU et al. beschreiben in Appl. Catal. B 63 (2005) 232 - 242, daß sich gemäß röntgenographischer Untersuchungen $BaCeO_3$ in Pt/$BaCeO_3$-BaO/$CeO_2$ nach Aufheizen in einer Atmosphäre aus 20 Vol.-% $CO_2$ in Helium auf 950˚C unter Bildung von Bariumcarbonat $BaCO_3$ und Cerdioxid zersetzt. Weiterhin zeigen sie thermoanalytische Untersuchungen, wonach im Temperaturbereich 400˚C bis 980˚C Gewichtsänderungen einer Pt/$BaCeO_3$-BaO/$CeO_2$-Probe auftreten, wenn diese in einer Atmosphäre aus 20 Vol.-% $CO_2$ in Helium aufgeheizt wird, und führen die beobachteten Gewichtsänderungen auf die Zersetzung von Bariumcerat und die Reaktion von Bariumoxid mit Kohlendioxid zurück. An anderer Stelle in derselben Publikation wird beschrieben, daß Bariumcerat bei 300˚C in einer Atmosphäre von ca. 3 % Wasser in Helium in Stickstoffdioxid-freier Atmosphäre langsamer zersetzt wird als in Anwesenheit von Stickstoffdioxid, wobei jedoch auch ohne Stickstoffdioxid nach 5 Stunden Reaktionszeit eine signifikante Menge des Bariumcerats zersetzt sei.

Bariumcerat kann also unter Einwirkung von Kohlendioxid bei Temperaturen oberhalb von 400˚C zersetzt werden. Dabei kann ein zweistufiger Reaktionsmechanismus gemäß Gleichung (1) zugrunde gelegt werden.

$$BaCeO_3 \quad \rightarrow \quad \left. \begin{array}{l} BaO + CeO_2 \\[4pt] \downarrow CO_2(g) \\[4pt] BaCO_3 \end{array} \right\} \qquad (1)$$

Enthält die Gasmischung zusätzlich Wasserdampf, beginnt die Zersetzung von Bariumcerat schon bei 300˚C, wobei ebenfalls von einem zweistufigen Reaktionsmechanismus (2) ausgegangen werden kann.

$$BaCeO_3 \quad + \quad H_2O(g) \quad \rightarrow \quad \left. \begin{array}{l} BaO + CeO_2 + H_2O(g) \uparrow \\ \downarrow CO_2(g) \\ BaCO_3 \end{array} \right\} \quad (2)$$

Dementsprechend erweist es sich als vorteilhaft, wenn das zur Reaktivierung verwendete Abgas neben hohen Anteilen an Kohlendioxid auch signifikante Anteile an Wasser enthält. Anteile von Stickstoffdioxid dürfen ebenfalls enthalten sein. Bevorzugt enthält das zur Reaktivierung verwendete Abgas neben 5 bis 20 Vol.-% Kohlendioxid 5 bis 15 Vol.-% Wasserdampf und 0 bis 5 Vol.-% Stickstoffdioxid.

Da die zu lösende Aufgabe darin besteht, einen thermisch gealterten Stickoxid-Speicherkatalysator während des regulären Fahrbetriebes zu reaktivieren, muß auch während der Katalysatorreaktivierung die Emissionsneutralität des Fahrzeugs gewährleistet sein. Das bedeutet, daß die Konzentrationen der vom Fahrzeug emittierten Abgaskomponenten die gesetzlich vorgeschriebenen Emissionsgrenzwerte während der Reaktivierung des Stickoxidspeicherkatalysators nicht überschreiten dürfen.

Die erfindungsgemäße Lösung des Problems besteht nun darin, zur Reaktivierung des Stickoxid-Speicherkatalysators ein Luft/Kraftstoffverhältnis zum Betrieb des Motors einzustellen, so daß das zur Reaktivierung genutzte Abgas eine Luftzahl von $\lambda = 1$ nicht übersteigt. Bevorzugt wird eine Luftzahl von $\lambda = 1$ eingestellt, wobei $\lambda = 1$ im Sinne dieser Schrift bedeutet, daß ein oszillierender Wechsel zwischen einer geringfügig höheren und einer geringfügig geringeren Luftzahl erfolgt, so daß im Mittel eine Luftzahl von $\lambda = 1$ eingehalten wird. Der Luftzahlbereich, in dem eine solche Oszillation erfolgt, liegt zwischen $\lambda = 0,9$ und $\lambda = 1,1$, bevorzugt zwischen $\lambda = 0,95$ und $\lambda = 1,05$ und ganz besonders bevorzugt zwischen $\lambda = 0,98$ und $\lambda = 1,02$, wie zum Betreiben eines Dreiwegekatalysators üblich.

Eine solche Wahl des Motorbetriebes stellt sicher, daß die erzeugte und zur Reaktivierung benötigte Abgasmischung, wenn sie über den Stickoxid-Speicherkatalysator geleitet wird, zur Reaktivierung ausreichend hohe Mengen Kohlendioxid und Wasser enthält. Dies ist insbesondere dann der Fall, wenn die im Fahrzeug eingesetzte Abgasreinigungsanlage zwei Abgasreinigungskonverter enthält, nämlich einen motornahen katalytischen Konverter und einen Unterbodenkonverter. Dabei können beide Konverter Stickoxid-Speicherkatalysatoren enthalten. Alternativ kann der motornahe Konverter einen Dreiweg-Katalysator oder einen Dieseloxidationskatalysator enthalten und der Unterbodenkonverter einen Stickoxid-Speicherkatalysator aufweisen. Sowohl der motornah eingesetzte Stickoxid-Speicherkatalysator, der wie beschrieben eine katalytisch aktive Edelmetallkomponente enthält, deren Aufgabe es ist, Kohlenmonoxid und Kohlenwasserstoffe mit Hilfe des im Abgas enthaltenen Sauerstoffs zu Kohlendioxid und Wasser umzusetzen, als auch der Dreiwege-Katalysator oder der Dieseloxidationskatalysator, stellen eine Erhöhung der Kohlendioxid-Konzentration und der Wasserkonzentration im Abgas sicher. Somit wird eine für die Reaktivierung der Stickoxid-Speicherkatalysatoren gut geeignete Gasmischung zur Verfügung gestellt und zugleich die Emissionsneutralität gewahrt.

Neuere mager betriebene Verbrennungsmotoren mit strahlgeführtem Brennverfahren können auch in Betriebspunkten mit Fahrzeuggeschwindigkeiten im Bereich 120 bis 150 km/h, die schon außerhalb des europäischen Fahrzyklus liegen, unter bestimmten Bedingungen mit überstöchiometrischem Luft/Kraftstoffverhältnis und Luftzahlen $\lambda > 1$ betrieben werden. Mit dem Ziel, höhere Kraftstoffeinsparungen zu erreichen, ist eine solche Betriebsweise auch grundsätzlich bevorzugt. Hat der Stickoxid-Speicherkatalysator durch thermische Alterung jedoch bereits an Speicherkapazität verloren, muß durch häufigeres Umschalten auf unterstöchiometrisches Luft/Kraftstoffverhältnis (Fettbetrieb) der Durchbruch von Stickoxiden vermieden werden, wobei der Kraftstoffverbrauchsvorteil gegenüber stöchiometrischem Luft/Kraftstoffbetrieb mit einer Luftzahl von $\lambda = 1$ verloren geht. Somit können Betriebspunkte mit stöchiometrischem Luft/Kraftstoffverhältnis zur Reaktivierung des Stickoxid-Speicherkatalysators genutzt werden, ohne daß es dabei zu einem Kraftstoffmehrverbrauch im Vergleich zum weiteren Betrieb eines nicht reaktivierten, thermisch gealterten Stickoxid-Speicherkatalysators kommt.

Da für die erfindungsgemäße Reaktivierung des Stickoxid-Speicherkatalysators eine Dauer von wenigstens einigen Minuten erforderlich ist, ist vorteilhaft, zur Reaktivierung des Katalysators Phasen des Fahrbetriebes zu wählen, in denen das Fahrzeug für die Dauer von wenigstens einigen Minuten bei Geschwindigkeiten oberhalb von 100 km/h betrieben wird. In solchen Betriebspunkten wird erfindungsgemäß ein stöchiometrisches Luft/Kraftstoffverhältnis eingestellt und ein thermisch gealterter Stickoxid-Speicherkatalysators reaktiviert. Unter diesen Bedingungen werden Abgastemperaturen von 200°C bis 950°C erzeugt, wie sie für die genutzte Zersetzungsreaktion des Bariumcerats in Kohlendioxid-haltiger Atmosphäre gut geeignet sind. Bevorzugt werden Temperaturen im Bereich von 300°C bis 700°C, ganz besonders bevorzugt von 400°C bis 650°C.

Die Entschwefelung von Stickoxid-Speicherkatalysatoren erfolgt häufig bei einer oszillierend wechselnden Luftzahl des Abgases im Bereich von $\lambda = 0,8$ bis $\lambda = 1,1$. Auch an eine solchen Entschwefelungsprozedur kann die Reaktivierung eines thermisch gealterten Stickoxid-Speicherkatalysators gekoppelt werden. Notwendig ist dies jedoch nicht. Entschwefelungen werden meist bei Katalysatortemperaturen oberhalb 600°C eingeleitet. Die Reaktivierung des thermisch gealterten Stickoxid-Speicherkatalysators ist hingegen schon bei Temperaturen ab 200°C möglich bzw. im Bereich 400°C bis 650°C besonders bevorzugt. So erweisen sich von der Entschwefelung unabhängige, kältere Betriebspunkte als deutlich vorteilhafter, zumal bei geringeren Temperaturen andere thermische Alterungseffekte beispielsweise der Edelmetallkomponenten vermieden werden.

Bei den genannten Betriebsbedingungen kann die geforderte Emissionsneutralität jederzeit sichergestellt werden, wenn eine Abgasreinigungsanlage eingesetzt wird, die einen Stickoxid-Speicherkatalysator in einem Konverter in Unterbodenposition und in einem motornahen Konverter enthält, oder alternativ einen Stickoxid-Speicherkatalysator in einem Konverter in Unterbodenposition und einen Dreiweg-Katalysator in einem motornahen Konverter aufweist. Beide Ausführungsformen stellen sicher, daß in einem Motorbetriebspunkt mit stöchiometrischem Luft/Kraftstoff-Gemisch ausreichende Konvertierungen für Kohlenmonoxid, Kohlenwasserstoffe und Stickoxide vorhanden sind, ohne daß die Stickoxid-Speicherfunktion des zu reaktivierenden Stickoxid-Speicherkatalysators genutzt werden muß.

In einer weiteren Ausgestaltung der Erfindung kann die Reaktivierung eines Stickoxid-Speicherkatalysators, der basische Strontium- oder Bariumverbindungen oder Strontium- und Bariumverbindungen auf einem Ceroxid enthaltenden Trägermaterial aufweist und darüber hinaus durch die thermische Alterung gebildete Strontium- und/oder Bariumverbindungen mit dem Trägermaterial enthält, auch mit einer Gasmischung erfolgen, die eine Luftzahl $\lambda < 1$ aufweist, wenn geeignete Abgastemperaturen sichergestellt sind. Auch solche Gasmischungen enthalten in der Regel ausreichende Mengen an Kohlendioxid und gegebenenfalls Wasser. Zur Wahrung der Emissionsneutralität sind dann gegebenenfalls zusätzliche Maßnahmen nötig, da sonst insbesondere die Gefahr zu hoher Restkohlenwasserstoffemissionen besteht. Hierzu sind eine Reihe von Modifizierungen der Abgasanlage vorstellbar, beispielsweise die Anordnung eines Oxidationskatalysators hinter dem zu reaktivierenden Stickoxid-Speicherkatalysator gegebenenfalls in Kombination mit einer Sekundärluftzufuhr zwischen dem Stickoxidspeicherkatalysator und einem nachgeschalteten Oxidationskatalysator. Die detaillierte Ausgestaltung einer solchen weitergehenden Abgasanlage ist von der jeweiligen Anwendung abhängig und nicht Gegenstand dieser technischen Lehre.

Die Erfindung wird im folgenden an Hand einiger Beispiele und Figuren näher erläutert. Es zeigen:

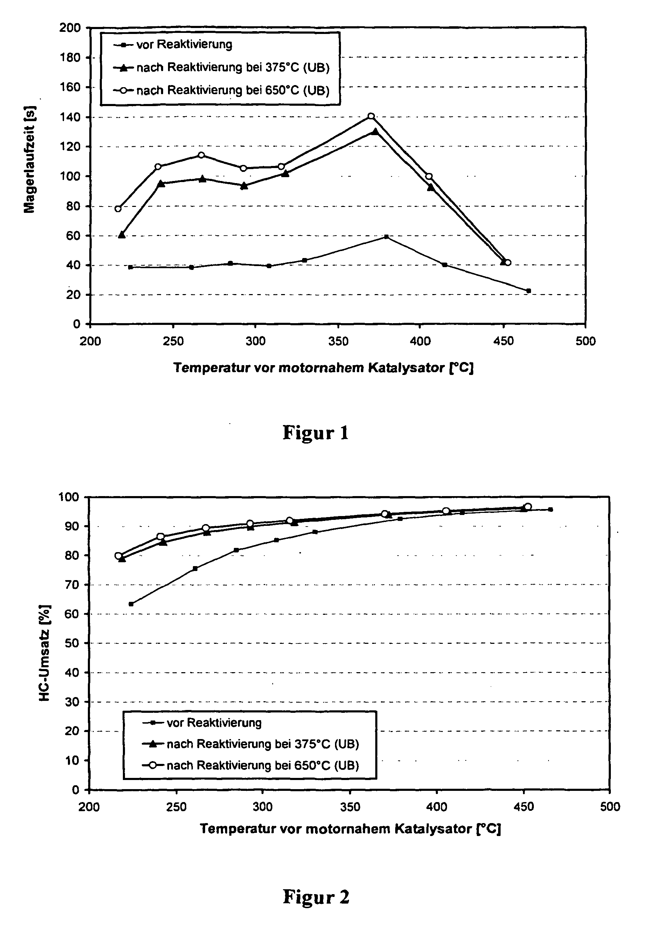

**Figur 1:** Gemessene Magerlaufzeiten des Gesamtsystems als Funktion der Tempe- ratur vor motomahem Katalysator ("NO$_x$-Fenster") in thermisch gealtertem Zustand (■), nach Reaktivierung bei 375°C im Unterbodenkatalysator (UB) und $\lambda = 1$ (▲) und nach Reaktivierung bei 650°C im Unterbodenkatalysator (UB) und $\lambda = 1$ (○).

**Figur 2:** Beobachtete HC-Konversionen des Gesamtsystems als Funktion der Tempe- ratur vor motornahem Katalysator in thermisch gealtertem Zustand (■), nach Reaktivierung bei 375°C im Unterbodenkatalysator (UB) und $\lambda = 1$ (▲) und nach Reaktivierung bei 650°C im Unterbodenkatalysator (UB) und $\lambda = 1$ (○).

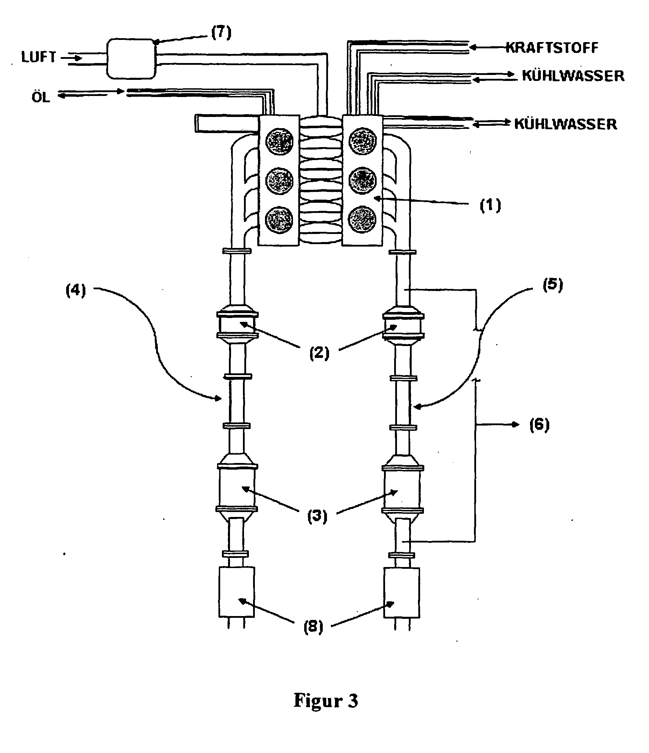

**Figur 3:** Verbrennungsmotor mit zweiflutiger Abgasreinigungsanlage, welche in jedem Abgasstrang einen motornahen Abgasreinigungskonverter und einen im Unterbodenbereich des Fahrzeugs angeordneten zweiten Abgasreini- gungskonverter enthält.

**Beispiel:**

Die Reaktivierung von thermisch gealterten Stickoxid-Speicherkatalysatoren wurde an einem Motorprüfstand mit Magermotor (6-Zylinder-Motor, 3,5 L Hubraum, Benzin-Direkteinspritzung) untersucht. Dort wurde eine zweiflutige Abgasreinigungsanlage eingesetzt.

Der Aufbau dieser Abgasreinigungsanlage ist in Figur 3 schematisch dargestellt. Jeder Strang der zweiflutigen Abgasreinigungsanlage des Motors (1) war mit zwei Konvertergehäusen ausgerüstet, von denen sich je eines in motornaher Position befand (2) und das andere an einer der Unterbodenposition des Fahrzeugs äquivalenten Stelle angeordnet war (3). Die Bezugsziffern (4) und (5) bezeichnen je einen Abgasstrang. Bezugsziffer (6) kennzeichnet schematisch die Abnahmestellen für zu analysierendes Abgas und steht zugleich für die Abgasanalysatoren. Die Bezugsziffern (7) und (8) bezeichnen Schalldämpfer.

Die Konverter in Abgasstrang (4) der zweiflutigen Anlage wurden mit Serienkatalysatoren ausgerüstet. Das Abgas dieses Abgasstranges wurde nicht untersucht. Die eingesetzten Katalysatoren dienten lediglich der Aufrechterhaltung realer Abgasgegendruckverhältnisse.

Im Abgasstrang (5) wurden sowohl im motornahen Konverter (2) als auch im der Unterbodenposition äquivalenten Konverter (3) Stickoxid-Speicherkatalysatoren gemäß der EP 1317953 A1 eingesetzt. Diese enthalten entsprechend dem in der genannten Anmeldung aufgeführten Anspruch 10 ein Speichermaterial, das eine basische Bariumverbindung als Speicherkomponente, aufgebracht auf einem hochoberflächigen Trägermaterial auf der Basis von Ceroxid enthält. Die Zusammensetzung des in diesem Strang der Abgasreinigungsanlage behandelten Abgases wurde mit einer geeigneten Abgasanalytik (6) (AMA 2000; Fa. Pierburg) untersucht.

Im motornahen Konverter (2) des Abgasstranges (5) wurde ein Katalysator mit einem einem Katalysatorvolumen von 0,82 1 eingesetzt. Die Zellenzahl betrug 93 Zellen pro Quadratzentimeter. Im Unterbodenbereich (3) kamen zwei Katalysatoren mit einem Gesamtvolumen von 2 1 zum Einsatz, wobei jeder Katalysator 1 1 Volumen aufwies. Diese Katalysatoren wiesen 62 Zellen pro Quadratzentimeter auf

Die katalytische Beschichtung aller verwendeten Katalysatoren bei diesen Untersuchungen entsprach einer Katalysatorformulierung aus der EP 1317953 A1, auf die hier bezüglich der Einzelheiten der Formulierung verwiesen wird. Bei dem Speichermaterial dieses Katalysators handelt es sich um Bariumoxid auf einem Cer/Zirkon-Mischoxid (90 Gew.-% Ceroxid und 10 Gew.-% Zirkonoxid).

Vor dem Einsetzen in die Konvertergehäuse wurden die Katalysatoren im Ofen bei 950 ˚C für die Dauer von 12 Stunden kalziniert, um eine gezielte thermische Alterung der Katalysatoren hervorzurufen.

Die thermisch gealterten Katalysatorsysteme wurden dann in der beschriebenen Konfiguration am Motorprüfstand charakterisiert. Hierzu wurde der Motor bei verschiedenen Lastpunkten im Magerbetrieb betrieben, so daß vor dem motornahen Katalysator Temperaturen zwischen 200 und 470 ˚C resultierten. Über einen im Abgasstrang (5) nach Unterbodenkatalysator (3) angeordneten $NO_x$-Sensor wurde die Stickoxid-Emission bestimmt. Bei Erreichen einer kritischen Stickoxid-Konzentrationsschwelle nach Unterbodenkatalysator wurde die Magerphase abgebrochen und durch Umschalten auf fette Betriebsbedingungen die Stickoxid-Regeneration eingeleitet. Das Ende der Regenerationsphase wurde ebenfalls mit Hilfe des $NO_x$-Sensors detektiert, wenn dieser einen Regenerationsmitteldurchbruch anzeigte. Die in diesem Verfahren ermittelten Magerlaufzeiten wurden zur Charakterisierung des Stickoxid-Speicherverhaltens in Abhängigkeit von der Temperatur vor motornahem Katalysator aufgetragen ("$NO_x$-Fenster"; Figur 1).

Aus den in der Rohemission und nach Unterbodenkatalysator gemessenen Kohlenwasserstoffemissionen wurde die Kohlenwasserstoffkonversion des Abgassystems gemäß folgender Formel berechnet:

$$\text{HC-Umsatz [\%]} = \frac{HC_{Rohemission} - HC_{Abgas(5)}}{HC_{Rohemission}} \cdot 100$$

Nach der Charakterisierung des Katalysatorsystems in thermisch gealtertem Zustand wurde eine Reaktivierung vorgenommen, indem zunächst am heißesten, im "NOx-Fenster" gewählten Betriebspunkt auf stöchiometrisches Luft/Kraftstoffverhältnis umgestellt und die Abgasrückführung für eine Stunde abgestellt wurde. Dies hatte Temperaturen im Unterbodenkatalysator von 375˚C zur Folge. Nach Ende der Reaktivierungszeit wurde die Abgasrückführung wieder eingeschaltet, der Motor auf eine magere Betriebsweise "zurückgestellt" und die Charakterisierung entsprechend der bereits beschriebenen Routine wiederholt.

Da die Zersetzung von Bariumcerat unter dem Einfluß von Kohlendioxid bevorzugt bei höheren Temperaturen erfolgt, wurde unmittelbar im Anschluß an die Charakterisierung nach Reaktivierung bei $\lambda = 1$ und abgeschalteter Abgasrückführung ein weiterer Reaktivierungsversuch durchgeführt. Dabei wurde ein Motorbetriebspunkt mit stöchiometrischem Luft/Kraftstoffverhältnis gewählt, bei dem der Unterbodenkatalysator auf 650˚C erwärmt wurde. Nach einer Betriebsdauer von einer Stunde unter den genannten Bedingungen wurde wieder auf magere Betriebsweise umgeschaltet und die bereits beschriebene Charakterisierungsprozedur ein drittes Mal durchgeführt.

Die Ergebnisse der Charakterisierungen sind in den Figuren 1 und 2 dargestellt.

Figur 1 zeigt die gemessenen Magerlaufzeiten des Gesamtsystems als Funktion der Temperatur vor motornahem Katalysator ("$NO_x$-Fenster") in thermisch gealtertem Zustand (■), nach Reaktivierung bei 375˚C im Unterbodenkatalysator (UB) und $\lambda = 1$ (▲) und nach Reaktivierung bei 650˚C im Unterbodenkatalysator (UB) und $\lambda = 1$ (○).

Bereits die Reaktivierung bei 375˚C (UB) führte zu einer deutlichen Verlängerung der Magerlaufzeit über den gesamten Temperaturbereich. Im für das Katalysatorsystem optimalen Betriebspunkt bei 370 - 380˚C vor motornahem Katalysator wurde eine Verbesserung der Magerlaufzeit von 59 Sekunden auf 130 Sekunden - also um 120 % - erreicht.

Mit der Reaktivierung bei 650˚C (UB) konnte nur noch eine geringe Verbesserung gegenüber der ersten Reaktivierung bei 375˚C (UB) erzielt werden. Dies ist vermutlich darauf zurückzuführen, daß nach der ersten Reaktivierung bereits ein nahezu optimaler Effekt erzielt wurde.

Figur 2 zeigt die beobachteten Kohlenwasserstoff-Konversionen des Gesamtsystems als Funktion der Temperatur vor motornahem Katalysator. Hierin zeigt die mit (■) gekennzeichnete Kurve die Leistung des Gesamtsystems in thermisch gealtertem Zustand. Nach Reaktivierung bei 375˚C im Unterbodenkatalysator (UB) und $\lambda = 1$ wird die mit (A) gekennzeichnete Umsatzkurve erhalten. (○) steht für die Kohlenwasserstoffkonvertierung des Gesamtsystems nach Reaktivierung bei 650˚C im Unterbodenkatalysator (UB) und $\lambda = 1$. Ein Vergleich der Kurven zeigt, daß mit der Reaktivierung auch eine leichte Verbesserung der Kohlenwasserstoffkonvertierung im Temperaturbereich zwischen 200 und 400˚C erhalten wird. Vor allem aber belegen die Daten, daß die erfindungsgemäße Reaktivierungsprozedur nicht zur Schädigung von Edelmetallzentren führt. Letztere sind für die oxidative Umsetzung von Kohlenwasserstoffen und Kohlenstoffmonoxid von entscheidender Bedeutung.

Die experimentellen Daten belegen, daß die erfindungsgemäße Betriebsweise bei $\lambda = 1$ in einem geeigneten Temperaturbereich zu einer teilweisen Wiederherstellung der Aktivität von thermisch gealterten Stickoxid-Speicherkatalysatoren führt, wenn die Stickoxid-Speicherkatalysatoren als Stickoxid-Speichermaterial eine basische Bariumverbindung auf einem Trägermaterial auf Basis von Ceroxid enthalten.

**Patentansprüche**

1. Verfahren zur On-board-Reaktivierung eines thermisch gealterten Stickoxid-Speicherkatalysators, welcher basische Strontium- oder Bariumverbindungen oder Strontium- und Bariumverbindungen auf einem Ceroxid enthaltenden Trägermaterial aufweist und darüber hinaus durch thermische Alterung gebildete Strontium- und/oder Bariumverbindungen mit dem Trägermaterial enthält, und der zur Reinigung von Abgasen eines Kraftfahrzeuges mit Magermotor verwendet wird,

   **dadurch gekennzeichnet,**

   **dass** die Verbindungen des Strontiums und/oder Bariums mit dem Trägermaterial während des regulären Fahrbetriebes durch Behandeln mit einer 5 - 20 Vol.-% Kohlendioxid, 5 - 15 Vol.-% Wasserdampf und 0 - 5 Vol.-% Stickoxide enthaltenden Gasmischung, die durch den Motor des Fahrzeugs erzeugt wird, zersetzt werden, wobei der Sauerstoffgehalt der Gasmischung während des Zersetzungsprozesses die Luftzahl $\lambda = 1$ nicht übersteigt, und die Erzeugung der zur Reaktivierung des Katalysators benötigten Gasmischung in von der Entschwefelung unabhängigen, kälteren Betriebszuständen des Magermotors, mit Abgastemperaturen zwischen 375°C und 650°C vorgenommen wird und die Dauer der Reaktivierung wenigstens einige Minuten beträgt.

2. Verfahren nach Anspruch 1,
   **dadurch gekennzeichnet,**
   **dass** die Abgasreinigungsanlage mindestens einen katalytischen Konverter enthält.

3. Verfahren nach Anspruch 2,
   **dadurch gekennzeichnet,**
   **dass** die Abgasreinigungsanlage mindestens einen motornahen katalytischen Konverter und einen Unterbodenkonverter enthält.

4. Verfahren nach Anspruch 3,
   **dadurch gekennzeichnet,**
   **dass** beide Konverter mindestens einen Stickoxid-Speicherkatalysator enthalten.

5. Verfahren nach Anspruch 3,
   **dadurch gekennzeichnet,**
   **dass** der motornahe Konverter einen Dreiweg-Katalysator und der Unterbodenkonverter einen Stickoxid-Speicherkatalysator enthalten.

6. Verfahren nach Anspruch 3,
   **dadurch gekennzeichnet,**
   **dass** der motornahe Konverter einen Dieseloxidationskatalysator und der Unterbodenkonverter einen Stickoxid-Speicherkatalysator enthalten.

7. Verfahren nach Anspruch 1,
   **dadurch gekennzeichnet,**
   **dass** zur Nachregulierung der Luftzahl der durch den Motor erzeugten Gasmischung eine Eindosierung eines Reduktionsmittels direkt in den Abgasstrang vor dem ersten in der Abgasanlage enthaltenen Stickoxid-Speicherkatalysator erfolgt.

**Claims**

1. Method for the on-board reactivation of a thermally aged nitrogen oxide storage catalyst which comprises basic strontium or barium compounds or strontium and barium compounds on a support material containing cerium oxide and additionally contains strontium and/or barium compounds with the support material formed by thermal ageing and which is used for purification of exhaust gases of a motor vehicle having a lean-burn engine, **characterized in that** the compounds of strontium and/or barium with the support material are decomposed during normal driving operation by treatment with a gas mixture which contains 5-20% by volume of carbon dioxide, 5-15% by volume of water vapor and 0-5% by volume of nitrogen oxides and is generated by the engine of the vehicle, with the oxygen content of the gas mixture during the decomposition process not exceeding the air index $\lambda = 1$, and the generation of the gas mixture required for reactivation of the catalyst is carried out in desulfurization-independent, relatively cold operating states of the lean-burn engine having exhaust gas temperatures in the range from 375˚C to 650˚C and the duration of the reactivation is at least a few minutes.

2. Method according to Claim 1, **characterized in that** the exhaust gas purification unit contains at least one catalytic converter.

3. Method according to Claim 2, **characterized in that** the exhaust gas purification unit contains at least one catalytic converter close to the engine and an underbody converter.

4. Method according to Claim 3, **characterized in that** both converters contain at least one nitrogen oxide storage catalyst.

5. Method according to Claim 3, **characterized in that** the converter close to the engine contains a three-way catalyst and the underbody converter contains a nitrogen oxide storage catalyst.

6. Method according to Claim 3, **characterized in that** the converter close to the engine contains a diesel oxidation catalyst and the underbody converter contains a nitrogen oxide storage catalyst.

7. Method according to Claim 1, **characterized in that** a reducing agent is introduced directly into the exhaust gas train upstream of the first nitrogen oxide storage catalyst present in the exhaust gas unit in order to adjust the air index of the gas mixture generated by the engine.

## Revendications

1. Procédé pour la réactivation à bord d'un catalyseur d'accumulation d'oxyde d'azote vieilli thermiquement, qui présente des composés basiques de strontium ou de baryum ou des composés de strontium et de baryum sur un matériau support contenant de l'oxyde de cérium et en outre des composés de strontium et/ou de baryum formés avec le matériau support par vieillissement thermique et qui est utilisé pour la purification du gaz d'échappement d'un véhicule motorisé avec un moteur à mélange pauvre, **caractérisé en ce que** les composés du strontium et/ou du baryum avec le matériau support sont décomposés pendant les conditions normales de roulage par traitement avec un mélange gazeux contenant 5-20% en volume de dioxyde de carbone, 5-15% en volume de vapeur d'eau et 0-5% en volume d'oxydes d'azote, qui est produit par le moteur du véhicule, la teneur en oxygène du mélange gazeux pendant le processus de décomposition ne dépassant pas le facteur d'air $\lambda = 1$, et la production du mélange gazeux nécessaire pour la réactivation du catalyseur étant réalisée dans des états de fonctionnement du moteur à mélange pauvre froids, indépendants de la désulfuration, à des températures du gaz d'échappement entre 375˚C et 650˚C et la durée de la réactivation étant d'au moins quelques minutes.

2. Procédé selon la revendication 1, **caractérisé en ce que** l'installation de purification du gaz d'échappement contient au moins un convertisseur catalytique.

3. Procédé selon la revendication 2, **caractérisé en ce que** l'installation de purification du gaz d'échappement contient au moins un convertisseur catalytique proche du moteur et un convertisseur dans le soubassement.

4. Procédé selon la revendication 3, **caractérisé en ce que** les deux convertisseurs contiennent au moins un catalyseur d'accumulation d'oxyde d'azote.

5. Procédé selon la revendication 3, **caractérisé en ce que** le convertisseur proche du moteur contient un catalyseur à trois voies et le convertisseur dans le soubassement contient un catalyseur d'accumulation d'oxyde d'azote.

6. Procédé selon la revendication 3, **caractérisé en ce que** le convertisseur proche du moteur contient un catalyseur d'oxydation de diesel et le convertisseur dans le soubassement contient un catalyseur d'accumulation d'oxyde d'azote.

7. Procédé selon la revendication 1, **caractérisé en ce que** pour la post-régulation du facteur d'air du mélange gazeux produit par le moteur, on réalise un dosage d'un réducteur directement dans le système de gaz d'échappement, en amont du premier catalyseur d'accumulation d'oxyde d'azote contenu dans l'installation pour gaz d'échappement.

**Figur 1**

**Figur 2**

LUFT →

(7)

KRAFTSTOFF ←

KÜHLWASSER ←

ÖL ←→

KÜHLWASSER ←→

(1)

(4)

(5)

(2)

(6)

(3)

(8)

**Figur 3**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0982066 A1
- EP 1317953 A1

**In der Beschreibung aufgeführte Nicht-Patentliteratur**

- **CASAPU et al.** *Appl. Catal. B,* 2005, vol. 63, 232-242